Europäisches Patentamt

European Patent Office

Office européen des brevets

(11) Veröffentlichungsnummer: **0 491 257 A1**

# (12) EUROPÄISCHE PATENTANMELDUNG

(21) Anmeldenummer: **91121069.8**

(22) Anmeldetag: **09.12.91**

(51) Int. Cl.5: **B28B 3/26**

(30) Priorität: **19.12.90 DE 4040733**

(43) Veröffentlichungstag der Anmeldung:
**24.06.92 Patentblatt 92/26**

(84) Benannte Vertragsstaaten:
**CH DE FR GB IT LI**

(71) Anmelder: **SIEMENS AKTIENGESELLSCHAFT**
**Wittelsbacherplatz 2**
**W-8000 München 2(DE)**

(72) Erfinder: **Klump, Stefan, Dipl.-Ing.**
**Gustav-Heinemann-Strasse 32**
**W-8620 Lichtenfels(DE)**
Erfinder: **Fischbach, Reinhard, Dipl.-Ing.**
**Toeplerstrasse 22**
**W-1000 Berlin 13(DE)**

(54) Einrichtung zur Herstellung eines Materialstranges mit zentraler Öffnung.

(57) Die Einrichtung besitzt einen Aufnahmekörper (10) mit einem Innenraum (12), der sich in Richtung auf eine Austrittsöffnung (18) konisch mit einem vorgegebenen ersten Konizitätswinkel ($\alpha 1$) verjüngt. Sie besitzt weiter einen Strömungskörper (26), der zum Einsetzen in den Innenraum (12) des Aufnahmekörpers (10) bestimmt ist und der sich an einem Endteil (28) konisch mit einem vorgegebenen zweiten Konizitätswinkel ($\alpha 2$) verjüngt. Der zweite Konizitätswinkel ($\alpha 2$) ist kleiner als der erste Konizitätswinkel ($\alpha 1$). Und sie besitzt eine in radialer Richtung des Innenraums (12) leicht nachgiebige Halterung (24) zum Halten des Strömungskörpers (26) im Innenraum (12) des Aufnahmekörpers (10). Dieses Werkzeug ermöglicht die Herstellung von Strängen (2) mit hoher Konzentrizität des zentralen Längskanals (4).

FIG 1

Die Erfindung betrifft eine Einrichtung zum Herstellen eines Stranges mit zentraler Öffnung aus einer verformbaren Masse.

Auf vielen Arbeitsgebieten werden kürzere oder längere Materialstränge mit zentraler Öffnung oder zentralem Längskanal, also hohlzylindrische Materialkörper benötigt. Beispielsweise werden solche Materialstränge - nach Einsetzen eines Lichtwellenleiters (LWL) in den relativ engen Längskanal - als Lichtwellenleiter-Steckerstifte verwendet. Hülsen oder Buchsen für Lichtwellenleiter zeigen im Prinzip denselben Aufbau: Es handelt sich dabei ebenfalls um hohlzylindrische Körper. Solche Stiftkörper und Hülsen können aus einer weichen und verformbaren Masse, zum Beispiel aus einer Keramik wie Zirkonoxid, durch Strangpressen hergestellt werden. Nach dem Strangziehen wird dafür gesorgt, daß die Masse erstarrt und ihre hohlzylindrische Form beibehält.

Wichtig ist vor allem, daß die hergestellten hohlzylindrischen Materialkörper eine gute Konzentrizität des zentralen Kanals aufweisen. Diese Bedingung einzuhalten stellt hohe Anforderungen an das zum Strangpressen verwendete Werkzeug, insbesondere dann, wenn der zentrale Kanal sehr eng sein soll. Beispielsweise werden für die besagten LWL-Steckerstifte hohlzylindrische Materialstränge mit einem Außendurchmesser von 2,5 bis 2,6 mm und einem Kanaldurchmesser von nur 80 bis 100 $\mu$ benötigt, wobei die Lage des Kanals höchstens um 15 bis 30 $\mu$ (Toleranz) von der geometrischen Mitte abweichen darf. Entsprechendes gilt auch für LWL-Hülsen oder -Buchsen, die zum Beispiel einen Außendurchmesser von 4,0 mm und einen Kanaldurchmesser von 2,5 mm besitzen sollen. Das Werkzeug sollte auch so konzipiert sein, daß die weiche Masse unmittelbar nach dem Vorgang des Strangpressens nicht nach innen zusammenfällt, so daß der zentrale Kanal "verklebt". Wünschenswert wäre darüber hinaus, wenn ein und dasselbe Werkzeug für die Herstellung von Materialsträngen mit Zentralkanälen von verschiedenem Durchmesser verwendet werden könnte.

Prinzipiell ließe sich ein Werkzeug aufbauen, das beim Strangpressen des Materials aus einer Austrittsöffnung mit einem davor angeordneten Dorn arbeitet. Für besonders kleine Kanaldurchmesser darf dieser Dorn jedoch nur einen Durchmesser besitzen, der in der Größenordnung der Stärke eines Haares liegt. Versuche mit einem solchermaßen konstruierten Werkzeug haben ergeben, daß die zentrale Einstellung des Dornes zeitaufwendig unter dem Mikroskop vorgenommen werden muß. Überdies stellen sich Schwierigkeiten insbesondere bei der Inbetriebnahme ein: Beim erstmaligen Strömen in Richtung auf die Austrittsöffnung fließt die Masse ungleichmäßig an den Dorn heran, so daß dieser verbogen wird (was zu einem nicht-konzentrischen Längskanal führt) oder gar abbricht. Um diesem Übelstand zu begegnen, wurden weitere Versuche mit einem Werkzeug gemacht, das mit einem rotierenden Dorn arbeitete. Hierbei ergab sich jedoch, daß die Umdrehungsgeschwindigkeit sehr hoch liegen mußte, zum Beispiel bei 20.000 bis 30.000 U/min., was einen aufwendigen Antrieb erforderte; darüber hinaus wurde der Stift im Betrieb infolge der Reibung an der verformbaren Masse heiß, was zu unerwünschten Rückwirkungen führte. Neben einer ausreichenden Robustheit des Werkzeugs ist also auch eine Nichtbeeinträchtigung des Fließverhaltens der strömenden Masse zu fordern.

Aufgabe der vorliegenden Erfindung ist es demnach, eine relativ einfach konzipierte Einrichtung zum Herstellen eines Stranges mit zentraler Öffnung aus einer verformbaren Masse anzugeben, welche Einrichtung die Einhaltung enger Toleranzen bei der Konzentrizität des zentralen Längskanals erlaubt.

Diese Aufgabe wird erfindungsgemäß gelöst durch eine Einrichtung, die gekennzeichnet ist durch

a) einen Aufnahmekörper mit einem Innenraum, der sich in Richtung auf eine Austrittsöffnung konisch mit einem vorgegebenen ersten Konizitätswinkel verjüngt,

b) einen Strömungskörper, der zum Einsetzen in den Innenraum des Aufnahmekörpers bestimmt ist und der sich an einem Endteil konisch mit einem vorgegebenen zweiten Konizitätswinkel verjüngt, wobei der zweite Konizitätswinkel kleiner ist als der erste Konizitätswinkel, und

c) eine in radialer Richtung des Innenraums leicht nachgiebige Halterung zum Halten des Strömungskörpers im Innenraum des Aufnahmekörpers.

Nach dem Einsetzen ergibt sich zwischen dem konischen Innenraum des Aufnahmekörpers und dem Endteil des Strömungskörpers ein sich verjüngender Strömungsraum, in den die fließfähige Masse beim Strangpressen mit zunehmender Geschwindigkeit hineingedrückt wird. Da der Strömungskörper mittels der Halterung elastisch aufgehängt ist und eine in sich homogene fließfähige Masse verwendet wird, zentriert sich der Strömungskörper selbsttätig; das heißt, eine Einstellung unter dem Mikroskop ist nicht erforderlich und die Einrichtung ist selbstjustierend, was zu einer besonders engen Toleranz bezüglich der Konzentrizität des gebildeten Längskanals im Strangpreßteil führt.

Gemäß einer vorteilhaften Weiterbildung ist vorgesehen, daß der Strömungskörper in axialer Richtung gegenüber dem Aufnahmekörper verstellbar ist. Dazu ist die Halterung bevorzugt mit einer Verschraubung versehen. Durch axiales Verstellen des Strömungskörpers läßt sich die Lochgröße im Materialstrang einstellen. Die Halterung kann dabei insbesondere einen Stift umfassen, der vorzugsweise aus Metall besteht, der an einem Ende in den Strömungskörper einschraubbar ist und der am anderen Ende einen Masseteiler aufweist, welcher mit dem Aufnahmekörper verschraubbar und welcher bevorzugt in den Massekörper einschraubbar ist.

Eine weitere vorteilhafte Ausbildung zeichnet sich dadurch aus, daß sich zwischen dem sich verjüngenden Innenraum und der Austrittsöffnung des Aufnahmekörpers ein radial sich verbreitender Austrittsraum befindet. Dabei findet beim Strangpressen im sich verbreiternden Austrittsraum eine langsame Druckentspannung der plastischen Masse statt. Dadurch bleibt die Masse nicht in der Austrittsöffnung haften. Vielmehr wird eine relativ glatte Außenwand des Strangprofils erzielt.

Besonders gleichmäßig runde Löcher oder Längskanäle lassen sich dann erzielen, wenn der Strömungskörper am konischen Ende, das nach dem Einbau in Richtung auf die Austrittsöffnung weist, abgerundet ist.

Weitere vorteilhafte Ausgestaltungen sind in den Unteransprüchen gekennzeichnet.

Ein Ausführungsbeispiel der Erfindung wird im folgenden anhand von drei Figuren näher erläutert. Es zeigen:

FIG 1    eine Einrichtung zum Strangpressen mit einem Aufnahmekörper, einem in dessen Innenraum eingesetzten Strömungskörper und einer Halterung für den Strömungskörper,

FIG 2    einen Blick von oben auf einen in der Halterung verwendeten sternförmigen Masseteiler und

FIG 3    einen Schnitt durch einen abgerundeten Arm des Masseteilers.

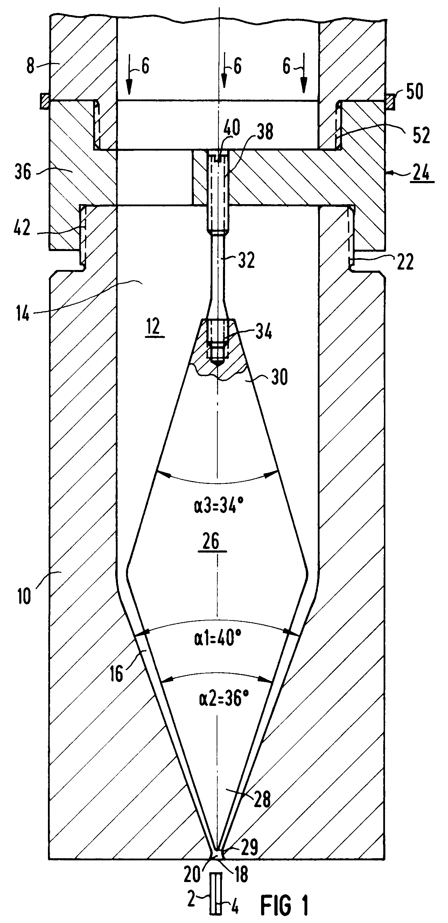

In Figur 1 ist eine Einrichtung gezeigt, mit der sich runde Materialstränge 2 mit einer sehr engen zentralen Öffnung oder einem sehr engen zentralen Längskanal 4 herstellen lassen. Bei der Herstellung kommt es auf eine gute Konzentrizität des Längskanals 4 an. Letzterer hat beispielsweise den eingangs erwähnten Durchmesser von 80 bis 100 $\mu$, wobei der Außendurchmesser des Materialstranges 2 etwa 2,5 mm beträgt. Er wird aus einer verformbaren oder plastischen Masse 6 hergestellt, die in Richtung der eingezeichneten Pfeile aus einer Kartusche 8 mit (nicht gezeigtem) Druckstempel in die Einrichtung hineingedrückt wird. Bei der Masse 6 kann es sich beispielsweise um eine Keramik wie Zirkonoxid handeln. Sie wird nach dem Durchgang durch die Einrichtung zum Erstarren gebracht, z. B. durch Trocknung an Luft.

Die Einrichtung umfaßt einen zylindrischen Aufnahmekörper 10, der zentral einen durchgehenden Innenraum 12 aufweist. Dieser Innenraum 12 besteht aus einem zylindrischen Rückraum 14 und einem Vorderraum 16, der sich in Richtung auf eine Austrittsöffnung 18 konisch mit einem vorgegebenen ersten Konizitätswinkel $\alpha1$ verjüngt. Der Konizitätswinkel $\alpha1$ kann beispielsweise $\alpha1 = 40°$ betragen. Der Aufnahmekörper 10 ist bevorzugt aus einem Edelstahl wie $V_2A$-Stahl gefertigt, und die gesamte Fläche des Innenraums 12 ist bevorzugt poliert, so daß ein weitgehend laminares Strömen der plastischen Masse 6 sichergestellt ist.

Bemerkenswert ist, daß sich der verjüngende Vorderraum 16 nicht bis zur Austrittsöffnung 18 hin verjüngt. Vielmehr ist zwischen dem sich verjüngenden Vorderraum 16 und der Austrittsöffnung 18 ein radial sich verbreitender Austrittsraum 20 vorgesehen. Wie später deutlich wird, dient dieser Austrittsraum 20 einer langsamen Druckentspannung der ausströmenden plastischen Masse 6. Dadurch kann eine relativ glatte Außenwand des Strangprofils 2 erzielt werden.

Der Aufnahmekörper 10 besitzt an seinem rückwärtigen Ende ein Außengewinde 22, an dem über eine allgemein mit 24 bezeichnete Halterung ein Strömungskörper 26 im Innenraum 12 festgehalten ist.

Der Strömungskörper 26 besteht ebenfalls bevorzugt aus einem Edelstahl wie $V_2A$-Stahl. Er besitzt ein vorderes Endteil 28 und ein rückwärtiges Endteil 30. Das vordere Endteil 28 verjüngt sich in Richtung auf die Austrittsöffnung 18 mit einem vorgegebenen zweiten Konizitätswinkel $\alpha2$. Dieser zweite Konizitätswinkel $\alpha2$ ist kleiner als der erste Konizitätswinkel $\alpha1$. Dadurch wird zwischen dem Teilraum 16 und dem Endteil 28 ein sich verengender Strömungsweg geschaffen, in dem die fließfähige Masse 6 mit zunehmender Geschwindigkeit in Richtung auf die Austrittsöffnung 18 strömt. Der zweite Konizitätswinkel $\alpha2$ kann beispielsweise 36° betragen. Allgemein gesagt ist die Differenz ($\alpha1 -\alpha2$) der beiden Konizitätswinkel $\alpha1$, $\alpha2$, je nach Anwendungsfall, bevorzugt 1 bis 5°. Im vorliegenden Fall beträgt diese Differenz etwa 2°. Auch die Außenfläche des Strömungskörpers 26 ist poliert, um ein leichtes laminares Fließen sicherzustellen.

Vorliegend besitzt der Strömungskörper 26 ein Rückteil 30, das konisch geformt ist und einen Konizitätswinkel $\alpha3$ von beispielsweise 34° aufweist. Die Spitze 29 des Endteils 28 ist etwas abgerundet. Sie liegt im eingebauten Zustand knapp vor der engsten Stelle des sich verjüngenden Innenraums 16 des Aufnahmekörpers 10. Der Abstand der Spitze 29 von der Austrittsöffnung 18 bestimmt den Durchmesser des Längskanals 4. Für den hier betrachteten Anwendungsfall der Herstellung von Lichtwellenleiter-Steckerstiften liegt die Spitze etwa 1 bis 2 mm vor der Austrittsöffnung 18.

Die Halterung 24 weist zwei Besonderheiten auf: Zum einen ist sie leicht nachgiebig, so daß sich der gehalterte Strömungskörper 26 in radialer Richtung des Innenraums 12 etwas verschieben kann, und zum anderen gewährleistet sie, daß die in axialer Richtung gemessene Position des Strömungskörpers 26 gegenüber dem Aufnahmekörper 10 verstellt werden kann.

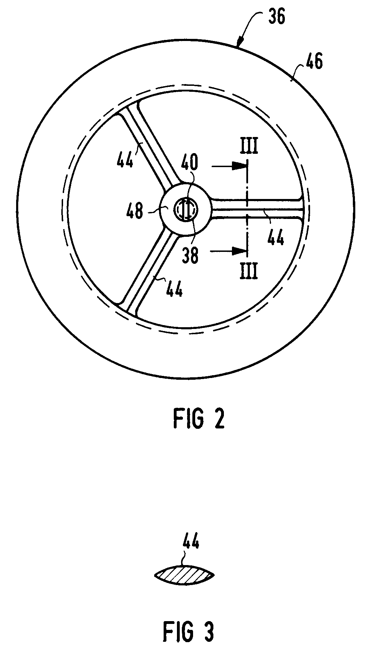

Die Nachgiebigkeit in radialer Richtung wird durch eine Stange oder einen Stift 32 gewährleistet, der bevorzugt aus Metall bestehen kann. Dieser Stift 32 ist zentral in das Ende des konisch geformten Rückteils 30 des Strömungskörpers 26 fest eingeschraubt. Die Verschraubung ist mit 34 bezeichnet. An seinem anderen Ende ist der Stift 32 in einen massedurchlässigen Zentralhalter oder Masseteiler 36 geschraubt. Einen Aufblick auf diesen Masseteiler 36 zeigt Figur 2. Die Verschraubung zwischen dem Stift 32 und dem Masseteiler 36 ist in Figur 1 mit 38 bezeichnet. Aus Figur 1 ist auch zu entnehmen, daß der Stift 32 endseitig einen Schlitz 40 aufweist. Mit einem in den Schlitz 40 hineingesteckten Schraubenzieher läßt sich die axiale Höhe des Strömungskörpers 26 und damit der Durchmesser des Längskanals 4 verstellen. Eine (nicht gezeigte) Mutter kann zum Arretieren verwendet werden. Der Masseteiler 36 besitzt unten ein Innengewinde 42, mit dem er auf dem Außengewinde 22 des Aufnahmekörpers 10 verschraubt ist.

Aus Figur 2 geht hervor, daß der Masseteiler 36 drei sternförmig angeordnete Arme oder Stege 44 besitzt. Diese Stege 44 verbinden einen zylindrischen Außenkörper 46 mit einer zentralen Nabe 48, in die der Stift 32 hineingeschraubt ist. Der Masseteiler 36 besteht bevorzugt ebenfalls aus einem Metall wie einem Edelstahl. Aus der Querschnittsdarstellung von Figur 3 geht hervor, daß die Stege 44 bevorzugt abgerundet sind, um ein leichtes laminares Fließen zu ermöglichen.

Die Kartusche 8 ist zentral auf dem Masseteiler 36 befestigt. Hierzu ist eine Befestigungseinrichtung vorgesehen, die in Figur 1 in Form eines Ringes 50 angedeutet ist. Stattdessen oder zusätzlich kann auch ein Gewinde 52 verwendet werden.

Es ist also ersichtlich, daß die verformbare Masse 6 in Richtung der Pfeile aufgrund des Druckes des Kartuschenstempels durch den Masseteiler 36 hindurchströmt und in den Innenraum 12 des Aufnahmekörpers 10 eintritt. Durch den Strömungskörper 26 wird die Masse 6 hier an den Rand gedrängt, und sie wird mit zunehmender Geschwindigkeit in Richtung auf die Austrittsöffnung 18 gepreßt. Der Strömungskörper 26 ist auch bei Druckschwankungen bestrebt, in einer zentralen Position zu bleiben.

Dies wird durch seine leicht nachgiebige Aufhängung am biegsamen Stift 40 ermöglicht. Die Einrichtung ist somit selbstjustierend. Im Bereich der Austrittsöffnung 18 und im Raum 20 herrscht eine hohe Fließgeschwindigkeit bei einem kleinen Druck. Dies ist von besonderem Vorteil. Die Spitze 29 des kegelförmigen Endteils 28 liegt dort, wo der Druck praktisch Null ist, also zum Beispiel 3 mm vor dem Austritt, aber noch vor der engsten Stelle, das heißt vor dem Austrittsraum 20.

Wie bereits dargelegt, wird eine homogene verformbare Masse 6 verwendet, beispielsweise eine Keramik wie ein Zirkonoxid. Diese Masse 6 kann den beschriebenen Strömungsweg weitgehend ungestört durchfließen und wird so zu gleichmäßigen Strangpreßteilen 2 geformt.

Zusammenfassend kann man also folgendes sagen: Die Einrichtung ist so konzipiert, daß eine gute Konzentrizität des Längskanals 4 durch die selbstjustierende Ausrichtung des Strömungskörpers 26 infolge seiner radial verschiebbaren Aufhängung erreicht wird. Es ist also wichtig, daß der Strömungskörper 26 in radialer Richtung beweglich am Masseteiler 36 befestigt ist. Der Durchmesser des Längskanals 4 kann durch axiale Verlagerung des Strömungskörpers 26 gegenüber dem Austrittsraum 20 stufenlos variiert werden. Der bei Lichtwellenleiter-Steckerstiften geforderte Kanaldurchmesser von etwa 100 $\mu$ wird dabei durch eine Kegelspitze 29 mit einem Krümmungsradius von zum Beispiel $\geq$ 0,2 mm erzielt. Geringe Druckschwankungen in der Masse 6 verursachen keine Verlagerung der Kegelspitze 29. Der Strömungskörper 26 und der Austrittsbereich 18, 20 sind in ihrer Geometrie und Oberflächengüte so ausgelegt, daß über den gesamten Querschnitt eine laminare Strömung erreicht wird. Ein gutes Fließverhalten der Masse 6 wird durch die stetige Geschwindigkeitszunahme und Druckabnahme in Richtung auf die Austrittsöffnung 18 erreicht.

**Patentansprüche**

1.  Einrichtung zum Herstellen eines Stranges (2) mit zentraler Öffnung (4) aus einer verformbaren Masse, **gekennzeichnet** durch
    a) einen Aufnahmekörper (10) mit einem Innenraum (12), der sich in Richtung auf eine Austrittsöffnung (18) konisch mit einem vorgegebenen ersten Konizitätswinkel ($\alpha$1) verjüngt,
    b) einen Strömungskörper (26), der zum Einsetzen in den Innenraum (12) des Aufnahmekörpers (10) bestimmt ist und der sich an einem Endteil (28) konisch mit einem vorgegebenen zweiten Konizitätswinkel ($\alpha$2) verjüngt, wobei der zweite Konizitätswinkel ($\alpha$2) kleiner ist als der erste Konizitätswinkel ($\alpha$1), und

c) eine in radialer Richtung des Innenraums (12) leicht nachgiebige Halterung (24) zum Halten des Strömungskörpers (26) im Innenraum (12) des Aufnahmekörpers (10).

2. Einrichtung nach Anspruch 1, **dadurch gekennzeichnet,** daß der Strömungskörper (26) in axialer Richtung gegenüber dem Aufnahmekörper (10) verstellbar ist.

3. Einrichtung nach Anspruch 2, **dadurch gekennzeichnet,** daß der Strömungskörper (26) am Aufnahmekörper (10) mittels mindestens eines Gewindes (22, 34, 38, 42) befestigt ist.

4. Einrichtung nach einem der Ansprüche 1 bis 3, **dadurch gekennzeichnet,** daß die Halterung (24) einen Stift (32) umfaßt, der vorzugsweise aus Metall besteht, der an einem Ende in den Strömungskörper (26) einschraubbar ist und der am anderen Ende einen Masseteiler (36) aufweist, welcher mit dem Aufnahmekörper (10) verschraubbar (22, 42) und welcher bevorzugt in den Strömungskörper (26) einschraubbar (34) ist.

5. Einrichtung nach Anspruch 4, **dadurch gekennzeichnet,** daß der Masseteiler (36) sternförmig angeordnete Stege (44) besitzt, die bevorzugt abgerundet sind.

6. Einrichtung nach Anspruch 4 oder 5, **dadurch gekennzeichnet,** daß der Masseteiler (36) mit einer Befestigungseinrichtung (50, 52) für eine Kartusche (8) versehen ist, aus der die verformbare Masse (6) heraus- und in den Innenraum (12) des Aufnahmekörpers (10) hineindrückbar ist.

7. Einrichtung nach einem der Ansprüche 1 bis 6, **dadurch gekennzeichnet,** daß die Differenz der beiden Konizitätswinkel ($\alpha1,\alpha2$) bei 1 bis 5°, vorzugsweise bei 2°, liegt.

8. Einrichtung nach einem der Ansprüche 1 bis 7, **dadurch gekennzeichnet,** daß im eingebauten Zustand das Endteil (28) des Strömungskörpers (26) knapp, vorzugsweise in der Größenordnung von 1 mm, vor der engsten Stelle des sich verjüngenden Innenraums (12) des Aufnahmekörpers (10) endet.

9. Einrichtung nach einem der Ansprüche 1 bis 8, **dadurch gekennzeichnet,** daß sich zwischen dem sich verjüngenden Innenraum (12) und der Austrittsöffnung (18) des Aufnahmekörpers (10) ein radial sich verbreitender Austrittsraum (20) befindet.

10. Einrichtung nach einem der Ansprüche 1 bis 9, **dadurch gekennzeichnet,** daß der Innenraum (12) des Aufnahmekörpers (10) einen zylindrischen Rückraum (14) besitzt.

11. Einrichtung nach einem der Ansprüche 1 bis 10, **dadurch gekennzeichnet,** daß der Strömungskörper (26) ein konisch geformtes Rückteil (30) besitzt.

12. Einrichtung nach einem der Ansprüche 1 bis 11, da**durch gekennzeichnet,** daß der Strömungskörper (26) und/oder der Aufnahmekörper (10) aus einem Edelstahl besteht.

13. Einrichtung nach einem der Ansprüche 1 bis 12, **dadurch gekennzeichnet,** daß der Innenraum (12) des Aufnahmekörpers (10) und/oder der Strömungskörper (26) poliert ist.

14. Einrichtung nach einem der Ansprüche 1 bis 13, **dadurch gekennzeichnet,** daß der Strömungskörper (26) am konischen Ende (28), das beim Einbau in Richtung auf die Austrittsöffnung (18) weist, abgerundet ist.

15. Einrichtung nach einem der Ansprüche 1 bis 14, **dadurch gekennzeichnet,** daß der Aufnahmekörper (10) außen zylindrisch ausgebildet ist.

16. Einrichtung nach einem der Ansprüche 1 bis 15, **dadurch gekennzeichnet,** daß der erste Konizitätswinkel ($\alpha1$) etwa 40° beträgt .

17. Einrichtung nach einem der Ansprüche 1 bis 16, **gekennzeichnet** durch ihre Verwendung zur Herstellung von Lichtwellenleiter-Steckerstiften und/oder Lichtwellenleiter-Hülsen.

α3=34°

_26_

α1=40°

α2=36°

FIG 1

FIG 2

FIG 3

Europäisches
Patentamt

**EUROPÄISCHER RECHERCHENBERICHT**

Nummer der Anmeldung

## EINSCHLÄGIGE DOKUMENTE

EP 91121069.8

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | DE - B - 1 275 280 (OWENS-ILLINOIS) * Fig. 5,6,7 * | 1,2,3, 4,5,7, 11,16 | B 28 B 3/26 |
| X | DE - A - 1 629 401 (ARMENAT) * Fig. 1 * | 1,2,3, 4,7, 11,16 | |
| A | | 6 | |
| X | GB - A - 1 020 442 (THE ENGLISH) * Fig. 2 * | 1,2, 10,11, 15 | |
| X | US - A - 3 764 253 (WATERLOO) * Fig. 1 * | 1,2,7, 11,16 | |
| X | EP - A - 0 047 839 (GEBR. HAPPICH) * Fig. 1 * | 1 | |

| RECHERCHIERTE SACHGEBIETE (Int Cl⁵) |
|---|
| B 28 B B 29 C B 30 B |

Der vorliegende Recherchenbericht wurde für alle Patentansprüche erstellt.

| Recherchenort | Abschlußdatum der Recherche | Prüfer |
|---|---|---|
| WIEN | 24-03-1992 | GLAUNACH |